# EUROPÄISCHE PATENTANMELDUNG

(11) **EP 1 394 439 A1**
(43) Veröffentlichungstag der Anmeldung: **03.03.2004**
(21) Anmeldenummer: 03018354.5
(22) Anmeldetag: 13.08.2003
(51) Int. Cl.: F16F 9/53, F16F 13/10, F16F 13/30, B60G 3/01, B60G 17/08

(54) **Stossdämpfungssystem für Zweiräder**

(30) Priorität: 29.08.2002 DE 10240568
(71) Anmelder: Fludicon GmbH, 64293 Darmstadt (DE)
(72) Erfinder: Brendel, Wolfgang, D-64367 Mühltal (DE); Rosenfeldt, Horst, Dr., 64846 Gross-Zimmern (DE)
(74) Vertreter: Behrens, Helmut, Dipl.-Ing.

(57) **Zusammenfassung**

Ein Stoßdämpfungssystem für Zweiräder, das zwischen gefederten und ungefederten Teilen angeordnet ist und mindesten einen ein Druckmittel enthaltenden Zylinder und einen Kolben umfasst, soll derart weitergebildet werden, dass variable Dämpfungen eingestellt werden können, eine schnelle Reaktionszeit ermöglicht wird und das Stoßdämpfungssystem konstruktiv einfach aufgebaut ist. Dies wird dadurch erreicht, dass in mindestens einer Arbeitskammer (10,11,25,26,38,41) des Zylinders eine elektrorheologische und/oder magnetorheologische Flüssigkeit als Druckmittel vorgesehen ist, wobei bei einer Relativbewegung zwischen Kolben (3) und Zylinder(2,22,32,33) die elektrorheologische Flüssigkeit und/oder magnetorheologische Flüssigkeit ein Ventil auf Basis elektrorheologischer bzw. magnetorheologischer Flüssigkeiten (16) durchströmt, und wobei über Sensoren (18) Messsignale ermittelt und zur Ansteuerung bzw. Regelung des elektrischen bzw. magnetischen Feldes im Ventil (16) zur Einstellung der Dämpfung verwendet werden.

## Beschreibung

Fahrräder mit Federdämpfersystemen sind seit einiger Zeit üblich, da sie nicht nur die Sicherheit (d.h. Kontakt zwischen Reifen und Boden beim Bremsen, Beschleunigen und bei Kurvenfahrten muß erhalten bleiben, Kurs des Fahrzeuges muß stabil bleiben) sondern auch den Komfort (Dämpfung von Störkräften z.B. infolge von Fahrbahnunebenheiten) erhöhen.

Bei diesen bekannten Federdämpfersystemen für Zweiräder werden Hydraulikstoßdämpfer eingesetzt, wobei die Dämpfungskraft über federbelastete Drosseln oder Blenden erzeugt wird und einstellbar ist. Diese Federdämpfersysteme verfügen daher lediglich über fest eingestellte Parameter, so daß einer Einfedergeschwindigkeit jeweils eine Dämpferkraft fest zugeordnet ist.

Aufgabe der vorliegenden Erfindung ist es, ein Stoßdämpfungssystem für Zweiräder derart weiterzubilden, daß variable Dämpfungen eingestellt werden können, eine schnelle Reaktionszeit ermöglicht wird und das Stoßdämpfungssystem konstruktiv einfach aufgebaut ist.

Diese Aufgabe wird durch die im Patentanspruch 1 angegebenen Merkmale gelöst. Durch die Verwendung einer magnetorheologischen und/oder elektrorheologischen Flüssigkeit in dem Stoßdämpfungssystem kann eine schnelle Reaktionszeit erzielt werden, da z. B. der elektrorheologische Effekt im Millisekundenbereich abläuft und reversibel ist. Das System weist einen geringen Verschleiß auf, da die Dämpfungsfunktion ohne bewegliche Teile realisiert werden kann.

Die Erfindung nutzt die Eigenschaften von elektrorheologischen bzw. magnetorheologischen Flüssigkeiten aus. Bei derartigen Flüssigkeiten handelt es sich in der Regel um Suspensionen, d.h. in einem Trägermedium suspendierte Festpartikel, die über das elektrische bzw. magnetische Feld polarisierbar sind. Durch Einwirken eines elektrischen Feldes bzw. magnetischen Feldes kann die Viskosität von elektrorheologischen bzw. magnetorheologischen Flüssigkeiten in weiten Bereichen sehr schnell und reversibel eingestellt werden. Bei elektrorheologischen Flüssigkeiten wird hierfür an Elektrodenanordnungen eine elektrische Steuerspannung zur Erzeugung eines elektrischen Feldes gelegt.

Die Wechselwirkung zwischen der Elektrodenanordnung und der elektrorheologischen Flüssigkeit kann abhängig von der Art der Flüssigkeitsdeformation nach drei grundsätzlichen Moden unterschieden werden, dem Shear-Mode (Elektroden verschieben sich relativ zueinander in parallelen Ebenen), dem Flow-Mode (Elektroden sind fest angeordnet, die Flüssigkeit strömt zwischen den Elektroden hindurch) und dem Squeeze-Mode (Elektroden verändern ihren Abstand zueinander). Diese Moden können auch in Kombination auftreten. Näheres hierzu findet sich in dem Buch "Technischer Einsatz neuer Aktoren", Expert Verlag 1995, Kapitel 2.3.1 und Bild 3.1.

Dämpfungssysteme auf Basis von elektrorheologischen Flüssigkeiten bzw. magnetorheologischen Flüssigkeiten sind prinzipiell bereits bekannt. Der Aufbau eines derartigen Stoßdämpfers ist beispielsweise aus der Druckschrift "Technischer Einsatz neuer Aktoren", Expert-Verlag 1995, Seite 57 und 58, bekannt. Bei diesen Stoßdämpfern sind in einem zylindrischen Gehäuse zwei Druckmittelräume durch einen Kolben getrennt, wobei beispielsweise der Kolben Fluiddurchlaßöffnungen besitzt, durch die die elektrorheologische Flüssigkeit strömt. Die Dämpfkraft des Schwingungsdämpfers in Zug- und Druckhub ist dann durch Veränderung der rheolocischen Eigenschaften des Fluides variabel einstellbar.

Durch den Einsatz eines Dämpfungssystemes auf Basis von elektrorheologischen Flüssigkeiten und/oder magnetorheologischen Flüssigkeiten für Zweiräder, ist es möglich, eine in Abhängigkeit von der Fahrsituation vorwählbare Einstellung der Dämpferkraft zu ermöglichen. Dies kann in Zug- und Druckhubrichtung unterschiedlich erfolgen, wobei die Einstellung vollautomatisiert, teilautomatisiert oder auch manuell erfolgen kann.

Durch das erfindungsgemäße Stoßdämpfungssystem können dynamische Belastungen schnell und zuverlässig kompensiert werden. Das Stoßdämpfungssystem ist komfortabel und sicher zugleich, denn es bietet in seiner Form als Kennfelddämpfer die Möglichkeit bei einer Einfedergeschwindigkeit eine Zuschaltung einer Dämpfung innerhalb eines bestimmten Kraftintervalls.
Der Einsatz von elektrorheologischen bzw. magnetorheologischen Flüssigkeiten ermöglicht dabei eine leichte und energiesparende Konstruktion, die sich kostengünstig herstellen, komfortabel und zuverlässig handhaben und einfach warten läßt.

Vorteilhaft ist weiterhin, daß das Stoßdämpfungssystem auf Basis elektrorheologischer und/oder magnetorheologsicher Flüssigkeiten in unterschiedlichen Bauformen, beispielsweise integriert in dem Schaft einer Fahrradgabel oder auch als aufgesetzte Lösung z.B. als Modul an einer Fahrradgabel realisiert werden kann.

Das Stoßdämpfungssystem kann im Bereich des Vorder- bzw. des Hinterrades zwischen Aufhängungs- und Rahmenteil, zwischen Sattel und/oder Rahmenteil, in ungefederten Rahmenteilen oder auch in sämtlichen Hohlräumen in gefederten Rahmenteilen (z.B. Rahmen, Steuerrohr, Lenker, Schwingen, Sattelstützen) angeordnet werden.

Grundsätzlich kann das Stoßdämpfungssystem über die Einleitung von Wegen (Längsdämpfer) oder Winkeln (Drehdämpfer) realisiert werden.
Die Erfindung wird nachfolgend anhand eines bevorzugten Ausführungsbeispiels näher erläutert. Die Figuren zeigen:
- Fig. 1:: in einer Schnittdarstellung ein Ausführungsbeispiel eines Stoßdämpfungssystems bei dem Ventil und Gasfeder in einem externen Modul angeordnet sind;
- Fig. 2:: eine Schnittdarstellung eines Federdämpfungssystems integriert in einem Schaft einer Federgabel eines Fahrrades, und
- Fig. 3:: eine Schnittdarstellung eines Stoßdämpfungssystems ohne Gasfeder.

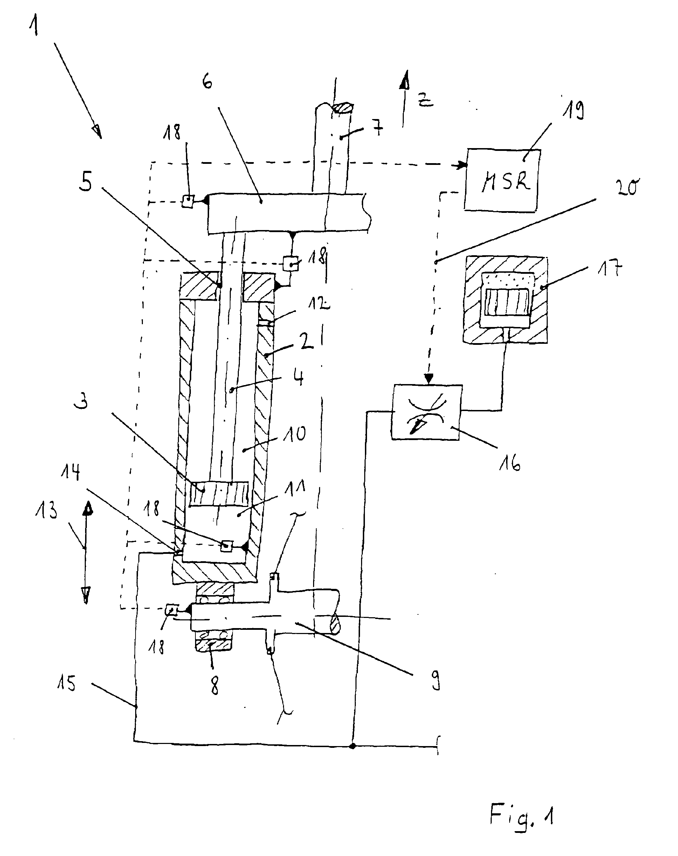

Das im Längsschnitt in Fig. 1 dargestellte Stoßdämpfungssystem 1 besteh aus einem Zylindergehäuse 2 mit einem axial verschiebbar gelagerten Kolben 3. Der Kolben 3 ist einseitig mit einer Kolbenstange 4 verbunden, die über eine Durchführung 5 abgedichtet aus dem Zylindergehäuse 2 herausgeführt ist und auf einer Seite einer Gabelbrücke 6 einer Federgabel verbunden ist. Alternativ könnte der in Fig. 1 dargestellte Kolben auch in Gleichgangsbauart eingesetzt werden. Der Einfachheit halber dargestellt ist nur die eine Seite der Federgabel sowie mittig an der Federgabel nach oben ragend angeordnet die Verbindung zum Steuerrohr. Der Übersichtlichkeit halber sind in den Figuren die in den Federgabeln verwendet Elemente wie Schrauben, Federn, Dichtungen, Führungsringe nicht dargestellt. Am unteren Endbereich des Zylindergehäuses 2 ist eine Lagerung 8 angeordnet, in der die Radnabe 9 drehbar gelagert aufgenommen ist.

Der Kolben 3 unterteilt das Zylindergehäuse 2 in zwei volumenveränderliche Arbeitskammern 10, 11. Hierbei ist die eine Arbeitskammer 10 mit Luft befüllt. Im oberen Endbereich der Arbeitskammer ist in der Zylindergehäusewand eine Lüftungsbohrung 12 eingebracht, so daß bei Bewegung des Kolbens 3 in Zug- bzw. Druckhubrichtung (Doppelpfeil 13) die Luft aus der Umgebung über die Lüftungsbohrung 12 in die Arbeitskammer 10 angesaugt bzw. aus der Arbeitskammer 10 verdrängt werden kann. Die untere Arbeitskammer 11 ist mit einer elektrorheologischen oder magnetorheologischen Flüssigkeit als Druckmittel gefüllt. Über eine in den unteren Endbereich des Zylindergehäuses 2 eingebrachte Bohrung 14 sowie eine daran anschließende Verbindungsleitung 15 steht die untere Arbeitskammer 11 mit einem Ventil 16, das als ERF-Ventil 16 bezeichnet wird, in Verbindung. ERF-Ventile sind in einer Vielzahl von Ausführungsformen bekannt. Das ERF-Ventil 16 besteht prinzipiell aus einem in einem Gehäuse gebildeten Ventilspalt, der von elektrisch ansteuerbaren Elektrodenanordnungen begrenzt wird, so daß eine durch den Ventilspalt strömende elektrorheologische Flüssigkeit durch Veränderung des zwischen den Elektrodenanordnungen erzeugten elektrischen Feldes hinsichtlich der Viskosität verändert werden kann. Durch die an die Elektrodenanordnung gelegte elektrische Spannung ist der ERF-Fließwiderstand und damit der Druckabfall über das Ventil 16 kontinuierlich steuerbar, so daß das Ventil 16 eine elektrisch einstellbare Drossel darstellt.

Das ERF-Ventil 16 wird in der Zeichnung nur schematisch dargestellt, da der Aufbau von derartigen Ventilen beispielsweise als Ventile mit konzentrisch angeordneten Zylinderelektroden oder Anordnungen paralleler plattenförmig beabstandet angeordneter Elektrodenanordnungen bekannt ist.

Dem Ventil 16 nachgeschaltet ist eine Gasfeder 17, die dem Ausgleich von Volumenschwankungen des Druckmittels dient und das Stoßdämpfungssystem mit einem definierten Druck beaufschlagt.

Betrachtet man die Radnabe 9 als in Vertikalrichtung Z fixiert, so wird über die Gabelbrücke 6 die Bewegung der gefederten Masse eingeleitet. Diese Relativbewegung zwischen Gabelbrücke 6 mit daran befestigtem Kolben 3 und dem Zylindergehäuse 2 bewirkt je nach Richtung, d.h. Zug- bzw. Druckhubrichtung 13, ein Verdrängen der elektrorheologischen Flüssigkeit aus der unteren Arbeitskammer 11 bzw. ein Einströmen von elektrorheologischer Flüssigkeit in die Arbeitskammer 11.

Stöße, die über das Rad eingeleitet werden, bzw. andere auftretende Störkräfte, die aufgrund der in der Radaufhängung vorhandenen Federsysteme auftreten können, werden über schematisch dargestellte Sensoren 18 erfaßt. Es können hierbei Sensoren zum Messen von kinetischen und/oder kinematischen Größen oder auch Druckaufnehmer eingesetzt werden. Die ermittelten Sensorsignale werden dann als Eingangsgröße dem Meß-Steuer-Regelsystem 19 zugeleitet und in Signale umgewandelt, die über eine Verbindungsleitung 20 das ERF-Ventil 16 mit der Steuerenergie zur Einstellung des elektrischen bzw. magnetischen Feldes ansteuern.

Es ist selbstverständlich, daß bei der Verwendung von magnetorheologischen Flüssigkeiten anstelle von Elektrodenanordnungen Spulenanordnungen zur Erzeugung eines magnetischen Feldes vorgesehen sein müssen. In beiden Fällen ist sowohl für die Erzeugung der Felder als auch für das Meß-Steuer-Regelsystem eine Energieversorgung erforderlich. Die Energieversorgung wird sichergestellt durch einen elektrischen Energiespeicher oder Energiewandler.

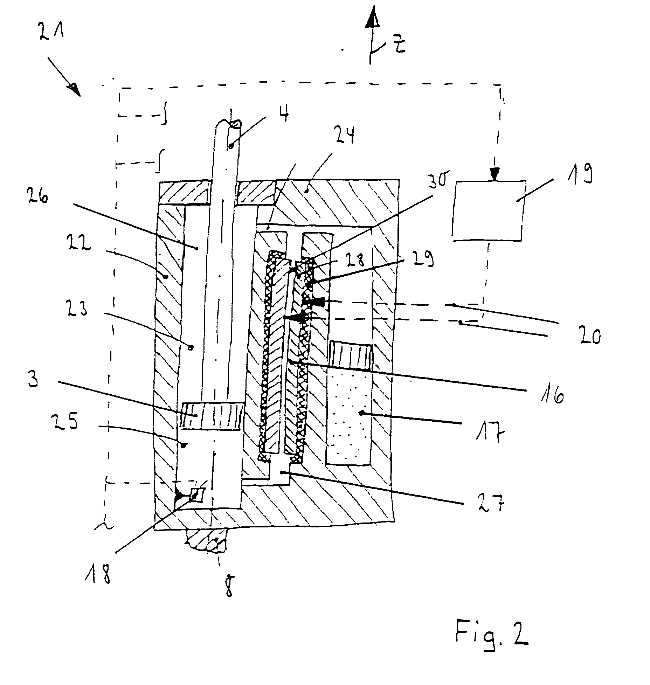

Fig. 2 zeigt in einem Längsschnitt eine weitere Ausführungsvariante eines Stoßdämpfungssystems 21, welches integriert im Schaft 22 einer Federgabel angeordnet ist. Hierbei ist im Schaft 22 eine Zylinderanordnung vorgesehen, die eine Zylinderbohrung 23 mit axial verschiebbar gelagertem Kolben 3 aufweist. Der Kolben 3 ist einseitig mit einer Kolbenstange 4 versehen und ist über eine Durchführung im Schaft 22 abgedichtet aus dem Gehäuse 24 herausgeführt. Der Kolben 3 unterteilt die Zylinderbohrung 23 in zwei volumenveränderliche Arbeitskammern 25,26, die über eine Fluidverbindungsleitung 27, die ebenfalls im Gehäuse 24 angeordnet ist, miteinander in Verbindung stehen. Sowohl die obere als auch die untere Arbeitskammer 25,26 ist mit einer elektrorheologischen bzw. magnetorheologischen Flüssigkeit als Druckmittel befüllt. In der Verbindungsleitung 27 integriert ist ein ERF-Ventil 16 angeordnet. Das ERF-Ventil 16, das bereits näher zu Fig. 1 erläutert wurde, besteht im wesentlichen aus Elektrodenanordnungen 28, die über Isolatoren 29 gegenüber der Gehäusewandung 24 elektrisch angeordnet sind. Über die schematisch dargestellte Verbindungsleitung kann im Ventilspalt 30, der zwischen den Elektrodenanordnungen 28 gebildet wird, ein elektrisches Feld hergestellt werden. Gleiche bereits zur Fig. 1 beschriebene Teile sind mit den gleichen Bezugszeichen versehen und werden an dieser Stelle nicht noch einmal erläutert.

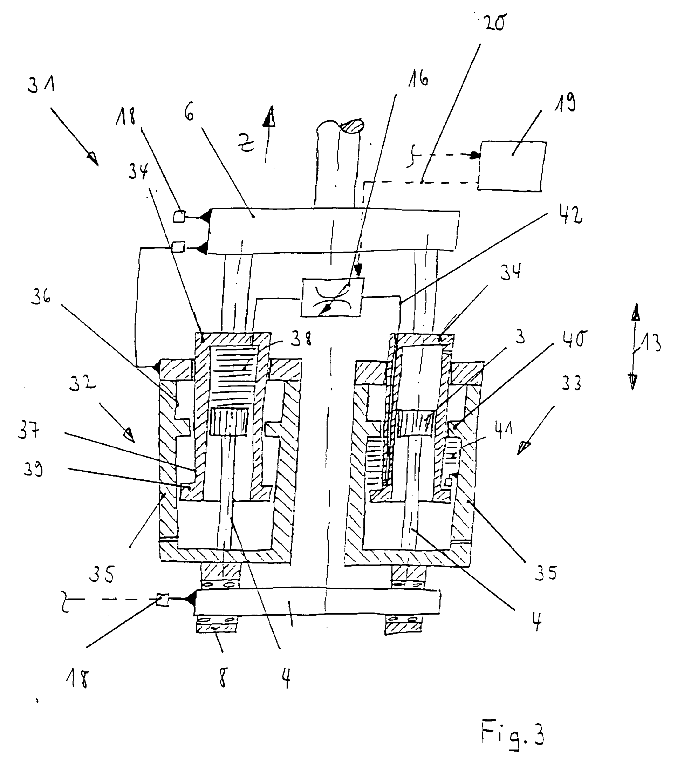

Fig. 3 zeigt eine weitere Ausführungsform eines erfindungsgemäßen Stoßdämpfungssystems 31, bei dem das Stoßdämpfungssystem 31 jeweils beidseitig im ersten und zweiten Schaft 32,33 der Federgabel integriert angeordnet ist. Mit der Gabelbrücke 6 der Federgabel fest verbunden sind zwei als Tauchrohre bezeichnete erste zylindrische Hülsen 34, die jeweils in einer als Standrohr bezeichneten zweiten zylindrischen Hülse 35 geführt werden. Zwischen der inneren Mantelfläche 36 der zweiten Hülse 35 und der äußeren Mantelfläche 37 der ersten Hülse 34 verbleibt ein Ringspalt. Die jeweils zweiten Hülsen 35 sind mittig am unteren Endbereich fest mit einer Kolbenstange 4 verbunden an der endseitig der Kolben 3 angeordnet ist. Der Kolben 3 ist axial verschiebbar in der jeweils ersten Hülse 34 gelagert, so daß in der ersten Hülse 34 eine zentrisch angeordnete volumenveränderliche Arbeitskammer 38 entsteht. Die ersten Hülsen 34 sind an ihrem unteren offenen Endbereich mit einer radial nach außen sich erstreckenden ringförmigen Erweiterung 39 versehen. Die zweiten Hülsen 35 weisen im oberen Bereich ihrer Längserstreckung nach innen ragende ringförmige umlaufende Vorsprünge 40 auf, so daß zwischen erster und zweiter Hülse 34,35 jeweils abgedichtete volumenveränderliche ringförmige Kammern 41 entstehen.

Die zentrische Arbeitskammer 38 der im ersten Schaft 32 gebildeten Zylinder anordnung sowie die ringförmige Arbeitskammer 41 der im zweiten Schaft 33 gebildeten zweiten Zylinderanordnung sind jeweils mit elektrorheologischer Flüssigkeit gefüllt und stehen über eine Verbindungsleitung 42 mit darin integriertem ERF-Ventil 16 in Verbindung.

Bei einer eingeleiteten Relativbewegung der ersten Hülse 34 zu der zweiten Hülse 35 wird in Abhängigkeit von der Bewegungsrichtung 13 entweder elektrorheologische Flüssigkeit aus der zentrischen Arbeitskammer 38 über das ERF-Ventil 16 zu der ringförmigen Arbeitskammer 41 gedrückt oder umgekehrt. Durch die Ausbildung von identischen Flächen in beiden Arbeitskammern 38, 41 ist ein Gleichgangprinzip realisiert. Durch diese Ausbildung kann auf eine zusätzliche Gasfeder, verzichtet werden. Die Ansteuerung des ERFS-Ventils 16 erfolgt gemäß der Beschreibung zu den vorbeschriebenen Ausführungsbeispielen.

## Patentansprüche

1. Stoßdämpfungssystem für Zweiräder, das zwischen gefederten und ungefederten Teilen angeordnet ist und mindestens einen ein Druckmittel enthaltenden Zylinder und einen Kolben umfaßt, **dadurch gekennzeichnet, daß** in mindestens einer Arbeitskammer (10, 11, 25, 26, 38, 41) des Zylinders eine elektrorheologische und/oder magnetorheologische Flüssigkeit als Druckmittel vorgesehen ist, wobei bei einer Relativbewegung zwischen Kolben (3) und Zylinder (2, 22, 32, 33) die elektrorheologische Flüssigkeit und/oder magnetorheologische Flüssigkeit ein Ventil auf Basis elektrorheologischer bzw. magnetorheologischer Flüssigkeiten (16) durchströmt, und wobei über Sensoren (18) Meßsignale ermittelt und zur Ansteuerung bzw. Regelung des elektrischen bzw. magnetischen Feldes im Ventil (16) zur Einstellung der Dämpfung verwendet werden.
